(19) **Europäisches Patentamt**
**European Patent Office**
**Office européen des brevets**

(11) **EP 4 553 531 A1**

(12) **EUROPEAN PATENT APPLICATION**

(43) Date of publication:
**14.05.2025 Bulletin 2025/20**

(21) Application number: **23306926.9**

(22) Date of filing: **08.11.2023**

(51) International Patent Classification (IPC):
*G01S 5/04* $^{(2006.01)}$    *G01S 5/02* $^{(2010.01)}$

(52) Cooperative Patent Classification (CPC):
**G01S 5/0278; G01S 5/0273; G01S 5/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Mitsubishi Electric R&D Centre Europe B.V.**
  **1119 NS  Schiphol Rijk Amsterdam (NL)**
  Designated Contracting States:
  **FR**
- **MITSUBISHI ELECTRIC CORPORATION**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC ME MK MT NL NO PL PT RO RS SE SI SK SM TR**

(72) Inventors:
- **CORLAY, Vincent**
  **35708 RENNES CEDEX 7 (FR)**
- **NGUYEN, Viet Hoa**
  **35708 RENNES CEDEX 7 (FR)**
- **GRESSET, Nicolas**
  **35708 RENNES CÉDEX 7 (FR)**

(74) Representative: **Plasseraud IP**
**104 Rue de Richelieu**
**CS92104**
**75080 Paris Cedex 02 (FR)**

(54)     **PROBABILISTIC RAY-TRACING AIDED POSITIONING**

(57)     The invention relates to a method and devices for determining a piece of data representing a position of a user equipment within an environment which comprises a set of base stations. According to the invention, the method comprises the following steps:
- Obtaining (S01) a vector of N angles ($[y_1, ..., y_N]$) of reception of a signal emitted by said user equipment, each angle of said vector corresponding to an angle of reception of the signal at a given base station of the set of base stations,
- Obtaining (S02) N probability distributions, each probability distribution being obtained from a result of a ray launching in a 3D representation of said environment,
- Computing (S03) at least one probability of the position of the user equipment, and as a function of said N probability distributions and said vector of N angles.

Figure 8

## Description

Domain

The present disclosure relates to positioning methods and devices.

Prior Art

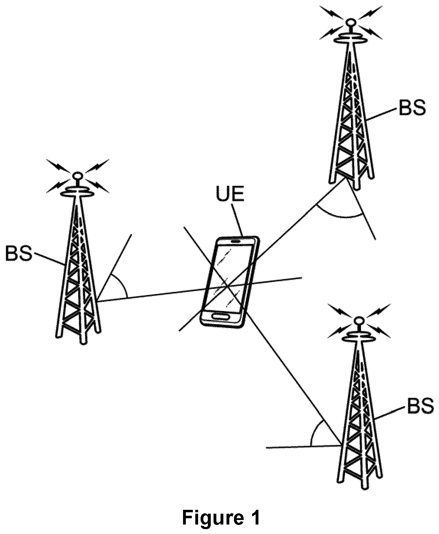

Standard positioning systems rely on measurements of so called *"line-of-sight"* (LOS). As an example, shown in Figure 1, if three base-stations ("BS") estimate the angle of arrival (AoA) of a reference signal transmitted by a user equipment ("UE") such as a telecommunication terminal, the regular triangulation method can be implemented as follows. A server, knowing the position of the two BS and the measured AoA, looks for the intersection of the three rays leaving the BS in the measured AoA direction. The estimated position of the UE is this intersection.

Nevertheless, the received signals at the BS may be *"non line-of-sight"* (NLOS). The signal might have been reflected before arriving to the BS. In this case, the measured AoA does not indicate the real direction of the UE but the direction of the last reflecting object. As a result, the above standard triangulation is not sufficient for the positioning operation.

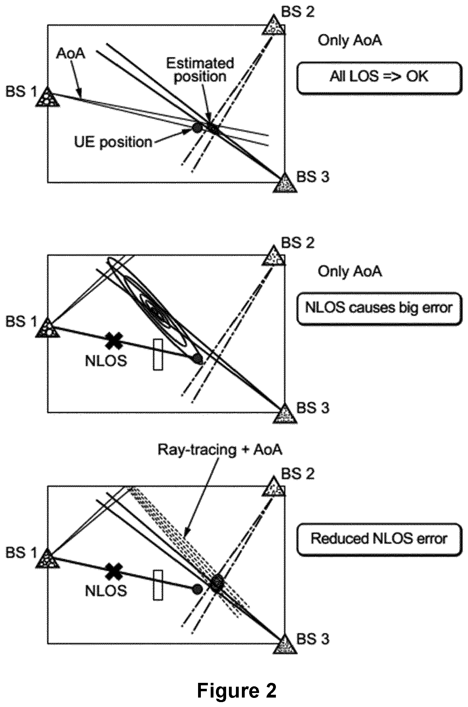

One solution to address this issue is to use online ray tracing: given measured AoA, ray tracing in these AoA directions is performed. The intersection of the rays is then the estimated position. This approach is called *"reverse ray tracing",* the principle of which is illustrated in Figure 2. Alternatively, geometric equations rather than conventional ray tracing can be considered.

Of course, the measurements may not be perfectly accurate, and the measured AoA corrupted by some noise. Several rays can be launched in an interval around the measured AoA. The considered width of the interval is twice the estimated standard deviation of the estimated AoA value. A least square solution, assuming i.i.d. Gaussian noise on the estimated AoA, can be also used.

But, in all these previously known techniques, the statistics of the measurement were not fully taken into account in conventional ray-tracing aided positioning, and the performance couldn't be optimal. To that end, it was formerly proposed a method for determining the location of a transmitter in which statistical properties of the AoA were computed and the 3D model of the environment was used for obtaining some weighted paths, which were then used to determine the location of the transmitter.

However, while relatively efficient, this previously proposed method needed a quite important number of rays to be launched during the online Monte Carlo ray launching phase in the 3D model of the environment. This implies that an important amount of resources have to be available and that the base stations were having these resources which is usually not the case.

Summary

The present disclosure aims to improve the situation.

To that end, it proposes a method for determining an estimation of a location of a transmitter in an environment comprising at least one receiver. More specifically it is disclosed a method for determining a piece of data representing a position of a user equipment within an environment which comprises a set of base stations the method comprising the following steps:

- Obtaining a vector of N angles of reception of a signal emitted by said user equipment, each angle of said vector corresponding to an angle of reception of the signal at a given base station of the set of base stations,
- Obtaining N probability distributions, each probability distribution being obtained from a result of a ray launching in a 3D representation of said environment,
- Computing at least one probability of the position of the user equipment, and as a function of said N probability distributions and said vector of N angles.

According to the disclosure, obtaining said N probability distributions comprises loading sets of probability distributions from a data structure.

According to the disclosure, obtaining said N probability distributions further comprises selecting, among said sets of probability distributions, one probability distribution set per angle of reception of the signal.

According to the disclosure, obtaining said N probability distributions comprises calculating, for each base station, sets of probability distributions as a function of fictive angles of reception.

According to the disclosure, calculating, for each base station, sets of probability distribution densities as a function of fictive angles of reception comprises at least one iteration of the following steps:

- determining one fictive angle of reception of the signal among a plurality of possible angles of reception,
- computing one probability distribution as a function of said fictive angle of reception,
- storing, in a data structure, said probability distribution associated to said fictive angle.

According to the disclosure, computing said a probability distribution as a function of said fictive angle of reception comprises:

- launching in the 3D representation of the environment, using a Monte Carlo algorithm, at least one ray, wherein AoD of the at least one ray is sampled as a function of the fictive angle,
- with the at least one ray launched in the 3D representation of the environment, building a map of points where the at least one ray cross a plane at a predetermined elevation in the 3D representation of the environment,
- computing a parametric distribution of said points in said map of points, delivering the probability distributions associated to the fictive three-dimensional angle.

According to the disclosure, computing the position of the user equipment, and as a function of said N probability distributions and said vector of N angles comprises:

- Computing a global probabilities distribution by multiplying the N probability distributions,
- From said global probabilities distribution, determining the maximum value which represents the most probable position of the user equipment.

According to the disclosure, obtaining N sets of probability distribution comprises, for each angle of the vector of N angles:

- launching in the 3D representation of the environment, using a Monte Carlo algorithm, at least one ray, wherein AoD of the at least one ray is sampled as a function of the angle,
- with the at least one ray launched in the 3D representation of the environment, building a map of points where the at least one ray cross a plane at a predetermined elevation in the 3D representation of the environment,
- computing a parametric distribution of said points in said map of points, delivering the probability distributions associated to the angle.

The present disclosure aims also at a computer program comprising instructions causing the implementation of the method defined above when such instructions are run by a processor.

It aims also at a device for determining the location of a transmitter in an environment comprising a plurality of receivers having respective known positions, the device comprising an interface for receiving measurements performed by the receivers and a processor to implement the method defined above.

Drawings

More details are presented in the specification below, with reference to the appended drawings where:

- Figure 1 shows the principle of positioning based on angle of arrivals' measurements in a line-of-sight (LOS) case,
- Figure 2 Illustrates the use of ray-tracing to enhance the positioning,
- Figure 3 shows an example of the environment comprising three receivers Rx (for example, three base stations BS for a radiofrequency environment) and an obstacle,
- Figure 4 shows the transmitter Tx to be localized, transmitting a signal (for example a radiofrequency signal),
- Figure 5 shows a step where receivers perform the Angle of Arrivals measurements,
- Figure 6 illustrates the obtaining of the paths using the geometry of the environment, each path having a different weight depending on its corresponding statistical property of AoA,
- Figure 7 illustrates the estimated transmitter positioning,
- Figure 8 illustrates the steps of the positioning method according to the disclosure,
- Figure 9 illustrates a map of points obtained when launching the rays from one BS with a given AoA and a given error statistics, ellipse representing a fitted GMM (Gaussian Mixture Model) on this map of points,
- Figure 10 shows a cumulative density function of the positioning error both with a low and a high number of launched rays,
- Figure 11 shows an example of embodiment of a device to perform the method presented above.

Description

In the description below, a scenario is considered, where a transmitter (or Tx), such as a user equipment (UE) in a radiofrequency environment in this example, sends a positioning signal to one or several receivers (Rx), such as base stations. The goal of the base stations is to locate the UE with the help of a 3D model of the environment (via ray-tracing for example). It is intended then to exploit here the geometrical property (by a ray-tracing simulation for example) of the environment. The statistical property of the measurements may also be used to enhance the positioning in a wireless system.

As previously exposed, former method allows partially solving the positioning problem of a user equipment by several base stations in an environment, by using a model of this environment and by using reverse ray tracing to identify the location of the user equipment. These methods are useful in situations where the user equipment is not able to transmit its own location (e.g., closed or partially closed environment, lack of global positioning signal, etc). More specifically, such methods use uplink angles of arrival (AoA) measurements of signals transmitted by the user equipment and use a three-dimension digital twin of the environment, as exposed in detail herein after. Ray launching in a Monte Carlo manner according to the AoA statistics enables to produce a map of points for each BS. These maps of points, which represents the intersection of the rays with a XY plane at a given UE elevation, are then combined.

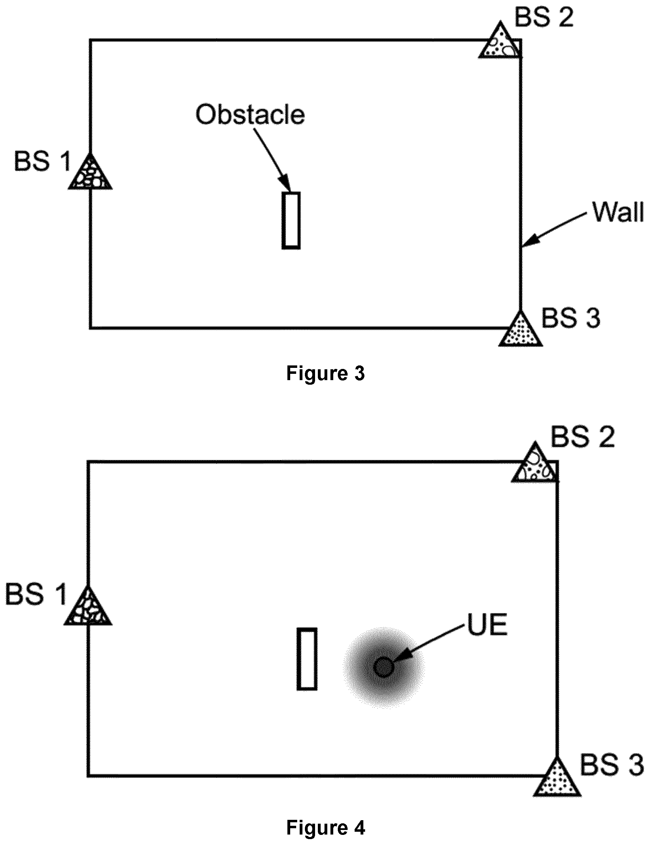

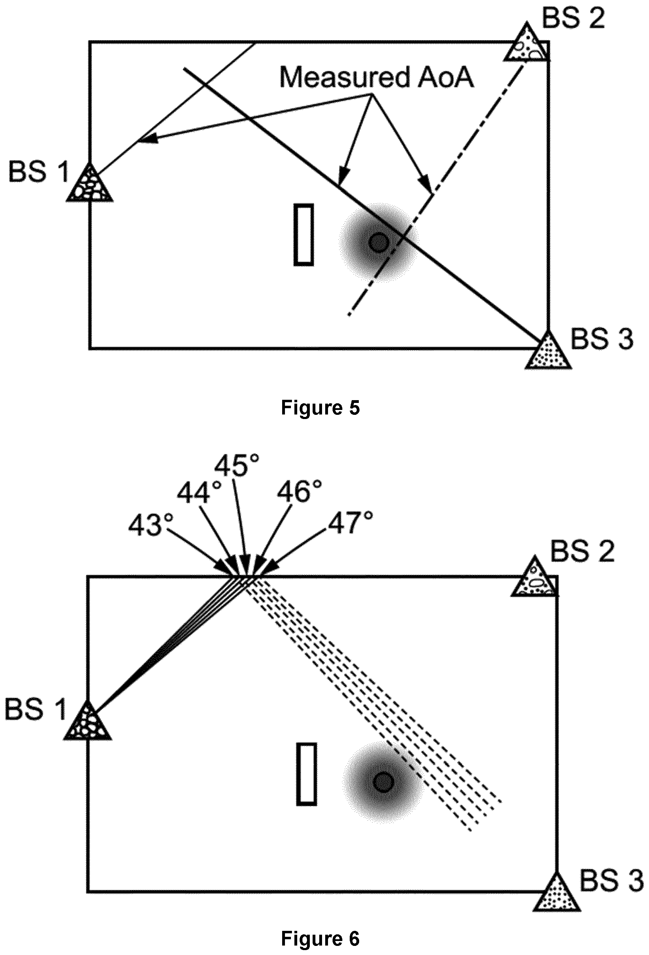

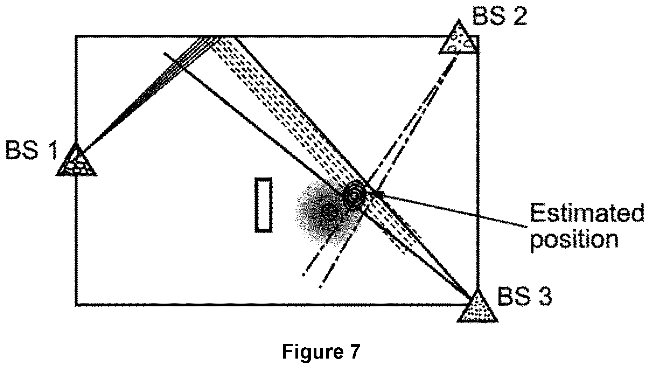

Figures 3, 4 and 5 illustrates the principles of AoA measurement in an illustrative situation. Typically, when a simple environment is considered, for example with only one obstacle and four walls, where three receivers are deployed as presented in the example of Figure 3 (the positions of these Rx being known), the environment is therefore perfectly modelled to obtain a 3D model containing the geometrical properties such as the position, the orientation, the dimension of the walls and the obstacle. A transmitter, in the environment with an unknown position, may need to be localized. This transmitter Tx transmits a radio signal, as presented in the example of Figure 4. Each receiver Rx receives the radio signal and measures the angle of arrival (AoA) based on the received signal. As an obstacle in the environment can block the direct path between the first receiver BS1 and the transmitter UE, the measured AoA at Rx BS1 is along the direction of the upper wall, while the Rxs BS2 and BS3 measure the AoA of the direct path between them and the Tx UE (as shown in Figure 5). However, the measured AoAs can be erroneous (due to noises, and/or interference, etc.). Using the AoA and a 3D representation of the environment, a Monte-Carlo ray-tracing operation is carried out to determine the position of the UE, as illustrated in Figures 6 and 7. The angle of arrival (AoA) becomes the angle of departure (AoD) of the rays, taking into account the error. For example, ray-tracing simulation can be used in 3D model for five rays where each ray starts at Rx BS1 with some angles defined as a function of the error, as shown in Figure 6. Combining the paths with associated weights from Rxs BS1, BS2 and BS3, the estimated position of Tx UE can be computed as illustrated in Figure 7. For example, a predetermined elevation is considered and the intersection of the rays and the plane at the elevation provides a map of point for each BS. The maps of points of every BS are combined and it allows obtaining a combined map of points, the location of the UE being determined by the coordinates of the combined maps of points at which there are the most important quantity of points of each BS.

While providing quite good results, it turns out that this method requires an important amount of ray to be launched according to the AoA statistics to obtain a good accuracy of the actual position of the user equipment. This may require an increase in power or other resource consumption that may not be desirable or available, as a function of the operational implementation conditions.

The inventors thus propose to fit a parametric distribution, such as a Gaussian mixture model (GMM), to each map of points of each base station. For a given XY plane, the parametric distribution is a two-dimensional multivariate distribution. Multiplying the probability density functions (also called pdf) obtained for each BS enables to compute the position probability of the UE. This approach yields an algorithm robust to a reduced number of launched rays, which by consequence, implies launching less rays while keeping the same results level or allows limiting calculation resources used, as exposed herein after.

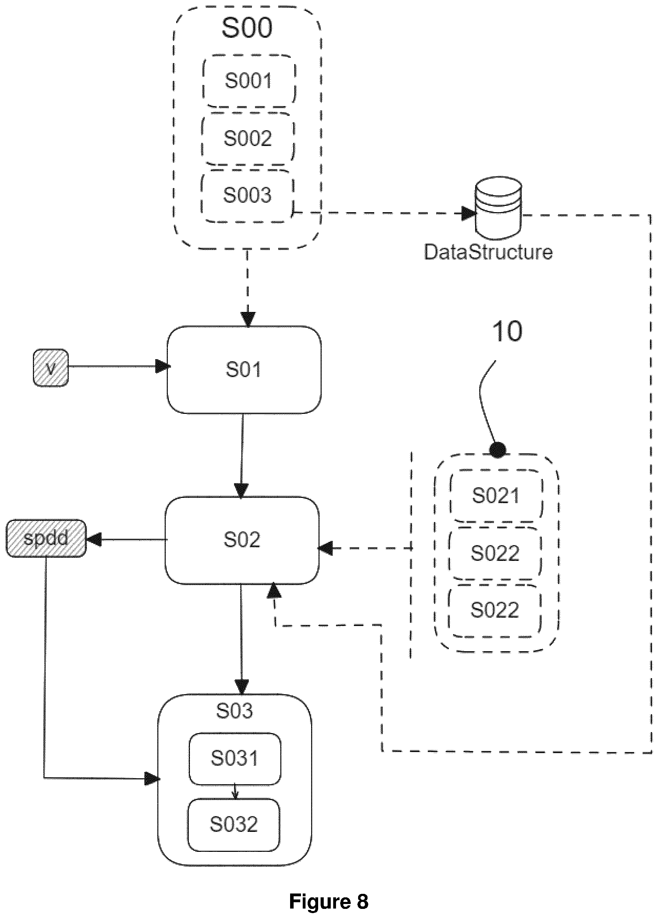

In consequence, the proposed method, described in relation with figure 8, comprises, for a given user equipment to locate:

- Obtaining (S01) a vector of N angles ($[y_1, \ldots , y_N]$) of reception of a signal emitted by said user equipment, each angle of said vector corresponding to an angle of reception of the signal at a given base station of the set of base stations,
- Obtaining (S02 N probability distributions, each probability distributions being obtained from a result of a ray launching in a 3D representation of said environment,
- Computing (S03) at least one probability of the position of the user equipment, and as a function of said N probability distributions and said vector of N angles.

Angles may be two-dimensional or three-dimensional angles, as a function of the situation. The N angles of the vector may be obtained from N corresponding base stations. In a variant, a base statin may be able to capture two or more independent angles of reception of the signal, and thus may be able to deliver several angles of reception of one single signal.

These (set of) probability distributions, based on parametric distributions may be fitted and stored in an offline phase such that ray launching can be avoided in the online phase, thus reducing the amount of resources (power, time) needed to provide the location of the user device. Indeed, in the online phase, for given measured AoA, the corresponding parameters of the distributions are directly recovered from the stored table and the signal processing is then performed without the need to launch the rays. This significantly reduces the computational complexity of the positioning method.

As a consequence, the proposed method can be implemented online *(i.e. in real time),* meaning that the parametric probability distributions are calculated in real time (i.e. after obtaining of the AoA measurement from the user equipment). The proposed method can also be implemented partly off line, meaning that the parametric probability distributions are calculated offline, from a predetermined set of parameters (number of rays launched, selected AoA and presupposed errors of AoA) and stored. The storage is accessible from the device which implements the online part of the method (e.g., one of the base stations, a central station) and the parametric probability distributions are used online, with the current AoA measurements on the signal of the user equipment to locate the user device.

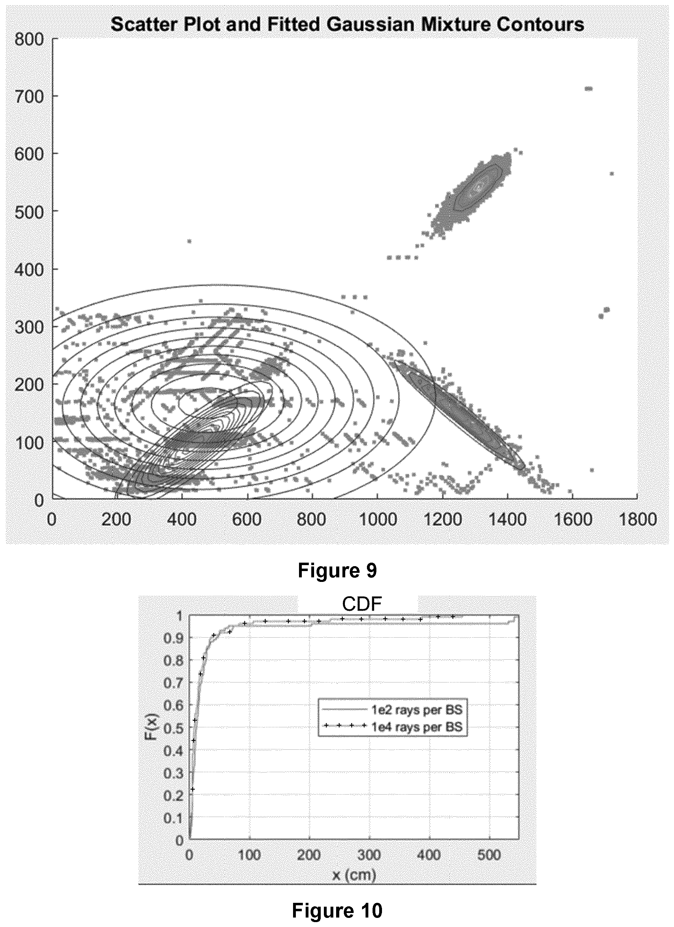

Whatever the method runs fully or partly online, the method comprises, in at least one example, fitting a parametric probability distribution, such as a Gaussian mixture model (GMM), for the map of points obtained for each BS. An example of a map of points and the corresponding fitted GMM with four clusters is shown on the following figure 9. The figure shows, for a given BS, the results of ray launching in a Monte Carlo manner, with a predetermined AoA measurement and a predetermined AoA error statistics (provided as parameters). The ellipses represent four clusters, and the distance separating the ellipse, in a given cluster, represent the spread of the distribution. In a given cluster, the closer this distance is, the more accurate the location of the point will be. The probability that the UE is in a position, given the measurement performed by each BS, is then obtained by multiplying the probability density function (pdf) for each BS.

The disclosed method can be implemented in two distinct modes:

- in the first mode, the rays are launched in the online phase and the distributions are also computed in the online phase: the position probabilities are obtained by multiplying the probability density functions of each BS. This provides the advantage to be more robust to a reduced number of launched rays, in an online phase.
- the second mode is divided into an offline phase and an online phase: first, for each BS and for a set of discretized AoA , the rays are launched to obtain the map of points for each discretized AoA. A parametric distribution is fitted, and the parameters are stored. Then, in the online phase, an AoA is measured by each BS and the corresponding distribution parameters in the stored table are recovered. The distributions are then used as in the first implementation mode. This provides the advantage that no ray launching in the online phase is required.

In the following, a full description of an embodiment of the disclosed method is made.

For the sake of simplicity, a general explanation for positioning the device according to reverse ray-tracing positioning method is described. At this end, the elevation of the UE to locate is known or estimated. According to the general method, given a measured AoA $y_i$ at one BS, ray launching from the BS in this direction is performed, i.e., the measured AoA becomes the angle of departure (AoD) of the rays, and the intersection of the projected rays with the plan give the map of points for one BS. The process is repeated for all BS and the intersections of the rays (on the maps of points) is the estimated position of the UE.

If the AoA measurements is noisy, one can proceed as follows: for each BS, the angles of the rays to be launched are sampled according to the statistics of the AoA measurement error. It is referred to this method as the Monte Carlo approach. In short, the result of this ray launching is a set of points in the xy plane at the UE elevation. These points correspond to the position where the launched rays cross the xy plane and provides the map of points. As explained earlier, this method requires an important number of rays to be launched to obtain good results.

For avoiding having to launch an important number of points, as explain earlier, it is proposed to group the point of the maps by cluster and to assign, de facto, a probability to the points.

In the following paragraphs, a precise explanation of an embodiment of the proposed method is disclosed.

*Statistical modelling and notations*

Let X be a random variable representing the position of a UE. Let 0 be a random variable representing the true AoA of the signal, and Y a random variable representing the BS measurement(s) of the AoA.

Regarding the notations, one uses $p(\theta|y)$ for p(0 = θ|Y = y) and similarly $p(x|y)$ for $p(X = x|Y = y)$. The distribution p (θ|y) represents the statistics of the uplink AoA measurement error, e.g., $p(\theta|y) \sim \mathcal{N}(\theta|\sigma^2)$ .

One lets n be the number of measurements such that $y = [y_1, y_2, \dots, y_i \dots, y_n]$.

The vector y comprises the measurement performed by all BS. Hence, for the sake of simplicity, we assume that there is one measurement per BS, and therefore n BS.

In the considered problem, the goal is to compute $p(x|\boldsymbol{y})$ (meaning the probability that the position is x considering y).

*Probability distribution fitting*

In order to address the accuracy issue encountered with a low number of rays, it is proposed to fit a 2D (two dimension) probability distribution on the map of points obtained when launching the rays from one BS in a Monte Carlo manner. It is recalled that the parametric probability density estimation involves selecting a common distribution and estimating the parameters for the density function based a data sample. Nonparametric probability density estimation consists in estimating the probability distribution as an histogram via for instance a binning technique.

For the herein disclosed technique, one distribution is fitted to the map obtained by each BS (e.g. in the case of three BS, one have three distributions, one per BS). Using a continuous parametric distribution enables to have a probability value for each position of scene.

We define $p(x|y_i)$ as the probability that the uplink signal yielding the measure $y_i$ was transmitted from the position x. The result of the fitting step is thus, for each BS *i,* a distribution $p(x \mid y_i)$.

The expression of this distribution as function of $p(\theta |y_i)$ (the AoA statistics of one BS) is therefore:

$$p(x|y_i) = \int_\theta p(x|y_i,\theta)p(\theta|y_i)\,d\theta = \int_\theta p(x|\theta)p(\theta|y_i)\,d\theta \qquad (1)$$

The above term highlights that two special cases should be considered.

1- One ray crosses several times the xy plane: one can consider focussing on the term $p(x|\theta)$. If the ray corresponding to an AoD $\theta$ crosses only once the plane xy at a position $x_1$, then $p(x_1|\theta) = 1$ and $p(x_k|\theta) = 0$ for all other $x_k$. If the ray crosses the plane xy at two positions $x_1$ and $x_2$, then $p(x_1|\theta) = p(x_2|\theta) = 0.5$, and $p(x_k|\theta) = 0$ for all other $x_k$. In general, the probability $p(x_k|\theta)$ of the crossing locations $x_k$ are therefore $p(x_k|\theta) = 1/$ *number of crossing location of the ray.*
2- One position *x* is crossed by several rays: in such cases, the probabilities $p(x|\theta)p(\theta|y_i)$ corresponding to each ray should simply be added, as indicated by the integral in the above equation.

As mentioned above, the objective is to fit a probability distribution $p(x|y_i)$ to the set of points obtained when launching the rays in a Monte Carlo manner. Since the AoD are therefore sampled according to $p(\theta|y_i)$, the above equation (1) becomes:

$$p(x|y_i) \approx \sum_{ray\ launched\ with\ AoD\ \theta} p(x|\theta)\,, \qquad (2)$$

This signifies that the probability $p(x|y_i)$ can be estimated by counting the number of rays crossing a given position *x,* i.e., the number of points at *x* on the map and applying the weighting factor $p(x_i|\theta)$ if a ray crosses several times the xy plane. For the sake of simplicity, it is assumed that the rays cross only once the xy plane.

One possibility to perform the fitting is to use a Gaussian Mixture Model (GMM), but other distributions may also be considered. As previously commented, figure 9 shows an example of a fitted GMM to a set of points. The weighting above *("One ray crosses several times the xy plane")* can easily be considered in the GMM fitting algorithm if needed.

This process of fitting a distribution is repeated for each BS. As a result, we have *n* distributions $p(x|y_i)$, one for each measure $y_i$ performed at each of the *n* BS.

*Exploiting the fitted distributions for positioning*

In following paragraphs, one shows that using the product of the fitted density functions indeed provides an estimate of the position probability, as indicated by equation (3.5) below.

The general method of positioning consists in computing the probability $p(x|\boldsymbol{y})$ by marginalizing with respect to 0 as:

$$p(x|\boldsymbol{y}) = \int_{\theta \in \mathcal{C}^n} p(x|\theta) \prod_{i=1}^{n} p(\theta_i|y_i)\,d\theta = \int_{\theta \in \mathcal{C}^n} \prod_{i=1}^{n} p(x|\theta_i)p(\theta_i|y_i)\,d\theta$$

The term $p(x|\theta)$ is an indicator function as the term is equal to one only if the *n* rays cross at *x*. Alternatively, one has:

$$p(x|\boldsymbol{y}) = \frac{p(y|x)p(x)}{p(y)} = \frac{p(y_1,\ldots,y_n|x)p(x)}{p(y)} = \frac{p(y_1|y_2,\ldots,y_n,x)p(y_2,\ldots,y_n|x)p(x)}{p(y)} \qquad (3)$$

The measurements in different BS are independent, thus:

$$p(y) = p(y_1)p(y_2)\ldots p(y_n)$$

Under the condition of Conditionally-Independent-Likelihood (CIL), one can address:

$$p(y_1|y_2,\ldots,y_n,x) = p(y_1|x)$$

Similarly,

$$p(y_2,\ldots,y_n|x) = p(y_2|x)p(y_3|x)\ldots p(y_n|x).$$

Regrouping above expression, equation (3) can be derived as:

$$p(x|y) = \frac{p(y_1|x)}{p(y_1)}\frac{p(y_2|x)}{p(y_2)}\cdots\frac{p(y_n|x)}{p(y_n)}p(x) = p(x|y_i)\ldots p(x|y_n)(p(x))^{1-n},$$

for all $x$ having $p(x) \neq 0$

Where $p(x)$ is the prior of position $x$. In the case $p(x) = 0, p(x|y) = 0$. Without any prior information, this prior can be uniformly initialized or can be chosen to follow an appropriate distribution. Each individual posterior $p(x|y_i)$ then can be computed by equation (2) and the parametric distribution data-fitting. If the prior p(x) is uniform, one gets:

$$p(x|\boldsymbol{y}) \propto \prod_{i=1}^{n} p(x|y_i) = \prod_{i=1}^{n} \int_{\theta} p(x|\theta)p(\theta|y_i)\, d\theta, \quad (3.5)$$

where the substitution is done according to (1). As the product and the integral commute, one can check that the two above equations, starting with the angles or the positions, are indeed equal.
As a result, having the distributions p(x|y_i), for all y_i, one can directly compute $p(x|\boldsymbol{y})$ by multiplying the probability density functions. This allows guaranteeing that the method of the invention is accurate.
This induces two main implementation modes described below. Once having p(xly), the positioning problem can be derived from a maximum a posteriori (MAP) estimation as follows:

$$\hat{x} = argmax_x\, p(x|y)$$

*Exploiting the fitted distributions in data fusion*

In the case another data is available, the data fusion can be employed in order to obtain a better precision of the positioning. Supposing there exists additional data *z*, besides the above-computed data *y*. The fusion is considered as:

$$p(x|y,z) = \frac{p(y,z|x)p(x)}{p(y,z)} = \frac{p(z|y,x)p(y|x)p(x)}{p(y,z)} \qquad (4)$$

The data y and z are supposed to be independent, thus:

$$p(y,z) = p(y)p(z)$$

Under the condition of CIL, we have

$$p(z|y,x) = p(z|x).$$

Therefore, the equation (4) simply becomes:

$$p(x|y,z) = \frac{p(y|x)p(x)}{p(y)}\frac{p(z|x)}{p(z)} = p(x|y)\frac{p(z|x)}{p(z)}$$

In above equation, $p(x|y)$ is the information extracted from data y; and $\frac{p(z|x)}{p(z)}$ is the information extracted from data **z**.

Based on what is mathematically explained above, one can derive two implementation modes of the proposed method: the first mode is a fully online mode, which, unlike preexisting method, requires a limited number of rays to be launched. The second mode is the partly offline mode, in which some calculations are done offline, to prepare some results in a database which is available in an online part (interrogation of the database). In both cases, the quantity of resources used online is limited and the accuracy of the method is improved.

*First implementation mode*

In this first implementation mode (10, figure 8), the positioning estimation is realized as follows.

The AoA measurement error $\sigma^2$ is estimated offline by each BS. Then, in the online phase

S01. An uplink AoA measurement $y_i$ is performed by each BS, thus delivering the vector (*v*) of three dimensional angles ($[y_1, \ldots , y_n]$),

S02. Obtaining the corresponding sets of probability distributions (*spdd*) comprises:

S021. Each BS launches the rays (or a centralized device launches the rays for each BS), in a Monte Carlo manner, with AoD angles sampled according $p(\theta|y_i)$,

S022. For each BS, the map of points where the rays cross the xy plane is constructed,

S023. For each map, a parametric distribution (such as the GMM) $p(x|y_i)$ is computed,

S03. Computing (S03) the position of the user equipment comprises:

S031. The distribution $p(x|\mathbf{y})$ is computed by multiplying the computed pdf of all BS,

S032. Use p(x|**y**) for target task (to obtain an estimate of the position), e.g., The maximum value of the distribution gives the most likely estimate.

The figure 10 shows the positioning accuracy obtained both with a low number of rays launched per BS (100) and a high number of rays per BS (10000). The cumulative density function of the positioning error is used. Regarding the GMM fitting algorithm, one implements for instance the standard GMM fitting algorithms with several modes (clusters) and keeps the model with lowest Akaike information criterion value. One can note that there is no significant difference in positioning accuracy of the UE in both cases (100 rays vs. 10000 rays). The distribution fitting approach enables to maintain the performance with a reduced number of rays. This method thus allows reducing the resources necessary to obtain the position of the UE while keeping the same accuracy of the results.

*Second implementation mode*

While the first implementation mode is robust to a reduced number of rays, it still involves ray launching in the online phase, as well as fitting distributions. This still induces a quite high computational complexity and potential latency, which can be reduced.

This issue can be addresses by the following second implementation mode. In short, the main steps consist in computing and storing the distributions for each possible measured AoA $y_i$ in an offline phase. Then, in the online phase, each BS measure angle $y_i$ and then the corresponding stored distribution $p(x|y_i)$ is recovered. Step S03, comprising steps S031 and S032 of the first implementation mode are then executed. The method is also described in relation with figure 8, and it comprises:

In the Offline phase:

The AoA measurement error $\sigma^2$ is estimated offline by each BS or by the system. Then, an offline preparation (S00) of sets of probability distributions is performed:

S001 In the case of 3D angles, discretize the possible 3D angles $[0,2\pi[ \times [0,\pi[$, This discretizing step can be optimized as a function of the impossible angles of reception that may exist, considering the positioning of the BS : it is optimal, for example not to consider the angles in which a reception is not possible (for example behind the BS if this BS is fixed on a wall); the discretizing step can consists in dividing the intervals in degrees, and e.g. to divide the $[0,\pi[$ interval in 180 degrees. For the full $[0,2\pi[ \times [0,\pi[$, one thus obtains 360*180 = 64800 possible 3D angles.

S002 For each BS, and for each discretized angle $y_i$, launch the rays in a Monte Carlo manner with AoD angles sampled according $p(\theta|y_i)$ and obtain the map of points where the rays cross the xy plane,

S003 For each obtained map of points, fit a distribution $p(x|y_i)$ such as a GMM and store the parameters of the distribution in a data structure.

In the Online phase:

S01 An uplink AoA measurement $y_i$ is performed by each BS, thus delivering the vector (v) of three dimensional angles $([y_1, \ldots , y_N])$,

S02 The parameters of the distribution $p(x_k|y_i)$ are recovered from the data structure:

With the angles of the vector (v), the corresponding precalculated distributions are recovered from the stored sets of probability distributions which have been prepared in the step S00, i.e. the entry for obtaining one corresponding probability distributions of a given BS is the measured 3D angle for this BS,

S03. Computing (S03) the position of the user equipment comprises:

S031. The distribution $p(x_k|\boldsymbol{y})$ is computed by multiplying the pdf of all BS,

S032. The maximum value of the distribution gives the most likely estimate.

As mentioned above, the main advantage of this second implementation mode is that it avoids ray launching and distribution fitting in the online phase. Nevertheless, it requires storing the distribution parameters for each possible angle and each possible BS. An estimate of the number of values to be stored is based on several parameters.

Let $N$ be the number of BS. In the simulation examples, $N = 4$. Let $|\mathcal{C}|$ be the number of values used to discretize the possible 3D angles (let's consider a simpler case of 180*180=32400). Let P be the number of parameters of the fitted distribution. For instance, if a 2D GMM is used with 7 clusters, then 6*7=42 parameters are required (where 6 represents the product of the 2D mean value and four values of the covariance). Then, the number of parameters to store is:

$$N * |\mathcal{C}| * P$$

With the given figures, the number of values is: 5 443 200 (or 1 360 800 per BS).

Note that only the 2D positioning problem is considered in previous examples.

For a three dimensions positioning problem (i.e., the user equipment needs to be located in three dimensions), the proposed method may be repeated for a plurality of XY plan. The objective is then to find the correct XY plan, which gives the Z coordinate. For instance, in a variant or a feature one can select the XY plan where one (x,y) position has a high probability relatively to the others (i.e., the XY plan where one cluster is very likely and has a low variance). Many techniques to select one XY plan among several available plans can be envisioned or derived from the proposed method.

According to another variant or feature, the proposed method can also be extended to the three dimensions positioning problem as follows. The 3D set of possible locations of the UE may be divided in small cubes and one now checks whether a cube is crossed by the ray to construct the equivalent of the map of points. In other words, instead of slicing the 3D environment in several plan, the environment is sliced in set of cubes, of a predetermined size. The other steps of the method remain unchanged.

According to another feature or variant, in case of a non-uniform antenna diagram/beamforming of the UE, its orientation could advantageously be considered. As a result, when constructing the map of points based via ray tracing, the AoA of rays at the crossing location could be considered. In other words, one map is constructed for one orientation of the UE where only the points corresponding to rays arriving with the expected orientation are kept. Hence, one should construct several maps for a measurement $y_i$, one map for each orientation of the UE. Then, at least one of the two implementation modes described above (online only/partly offline) are implemented for each possible orientation and the model yielding the best likelihood is kept. Note that only the fitted distributions corresponding to the same orientation should be combined. It is useless to combine distributions associated with different orientations.

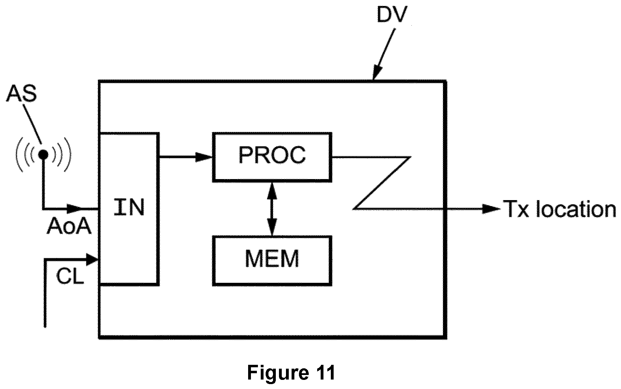

According to the embodiments presented above, each receiver can determine all or part of the position of the user equipment based on its own receiver's configuration. In addition, the determination of the user equipment position can also be performed by a centralised device (which may be one of the receiver Rx) which obtained the necessary data from the receivers and calculate the position as exposed in this disclosure. As shown in figure 11, the configuration of a device DV that affects the measurement can be, as presented above, an antenna system AS, for example coupled through an interface IN to a processing circuit including a processor PROC and a memory MEM. Alternatively, or in complement, or as a variant, necessary data (e.g. AoA) can also be received thru a communication link CL allowing the device to perform the position determination of the disclosure. The memory stores at least instructions of a computer program according to the present disclosure.

**Claims**

1. A method for determining a piece of data representing a position of a user equipment within an environment which comprises a set of base stations the method comprising the following steps:

   - Obtaining (S01) a vector of N angles ($[y_1, ... , y_N]$) of reception of a signal emitted by said user equipment, each angle of said vector corresponding to an angle of reception of the signal at a given base station of the set of base stations,
   - Obtaining (S02) N probability distributions, each probability distribution being obtained from a result of a ray launching in a 3D representation of said environment,
   - Computing (S03) at least one probability of the position of the user equipment, and as a function of said N probability distributions and said vector of N angles.

2. The method according to claim 1, wherein obtaining (S02) said N probability distributions comprises loading probability distributions from a data structure.

3. The method according to claim 2, wherein obtaining (S02) said N probability distributions further comprises selecting, among said probability distributions, one probability distribution per angle $[y_i]$ of reception of the signal.

4. The method according to claim 1, wherein obtaining (S02) said N probability distributions comprises calculating, for each base station, the probability distributions as a function of fictive angles of reception.

5. The method, according to claim 4, wherein calculating, for each base station, sets of probability distribution densities as a function of fictive angles of reception comprises at least one iteration of the following steps:

   - determining one fictive angle of reception of the signal among a plurality of possible angles of reception,
   - computing one probability distribution as a function of said fictive angle of reception,
   - storing, in a data structure, said probability distribution associated to said fictive angle.

6. The method according to claim 5, wherein computing said a probability distribution as a function of said fictive angle of reception comprises:

   - launching in the 3D representation of the environment, using a Monte Carlo algorithm, at least one ray, wherein AoD of the at least one ray is sampled as a function of the fictive angle,
   - with the at least one ray launched in the 3D representation of the environment, building a map of points where the at least one ray cross a plane at a predetermined elevation in the 3D representation of the environment,
   - computing a parametric distribution of said points in said map of points, delivering the probability distributions associated to the fictive angle.

7. The method according to claim 1, wherein computing (S03) the position of the user equipment, and as a function of said N probability distributions and said vector of N angles comprises:

   - Computing (S031) a global probabilities distribution by multiplying the N probability distributions,
   - From said global probabilities distribution, determining (S032) the maximum value which represents the most probable position of the user equipment.

8. The method according to claim 1, wherein obtaining (S02) N sets of probability distribution comprises, for each angle ($[y_i]$) of the vector of N angles ($[y_1, ... , y_N]$):

   - launching in the 3D representation of the environment, using a Monte Carlo algorithm, at least one ray, wherein AoD of the at least one ray is sampled as a function of the angle ($[y_i]$),

- with the at least one ray launched in the 3D representation of the environment, building a map of points where the at least one ray cross a plane at a predetermined elevation in the 3D representation of the environment,
- computing a parametric distribution of said points in said map of points, delivering the probability distributions associated to the angle ($[y_i]$).

9. A computer program comprising instructions causing the implementation of the method according to anyone of the preceding claims when such instructions are run by a processor.

10. A device for determining the location of a transmitter in an environment comprising a plurality of receivers having respective known positions, the device comprising an interface for receiving measurements performed by the receivers and a processor to implement the method according to anyone of claims 1 to 8.

**Figure 1**

Figure 2

**Figure 3**

**Figure 4**

**Figure 5**

**Figure 6**

**Figure 7**

**Figure 8**

Figure 9

Figure 10

Figure 11

**Europäisches Patentamt**
**European Patent Office**
**Office européen des brevets**

# EUROPEAN SEARCH REPORT

Application Number

EP 23 30 6926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NGUYEN VIET-HOA ET AL: "Probabilistic Ray-Tracing Aided Positioning at mmWave frequencies", 2023 13TH INTERNATIONAL CONFERENCE ON INDOOR POSITIONING AND INDOOR NAVIGATION (IPIN), IEEE, 25 September 2023 (2023-09-25), pages 1-6, XP034483130, DOI: 10.1109/IPIN57070.2023.10332518 [retrieved on 2023-12-06] * Abstract * * Introduction and Section II to IV * * Equations 3, 8, 10 * | 1-10 | INV. G01S5/04 G01S5/02 |
| A | VLADISLAV RYZHOV: "Robust Outdoor Positioning via Ray Tracing", ARXIV.ORG, CORNELL UNIVERSITY LIBRARY, 201 OLIN LIBRARY CORNELL UNIVERSITY ITHACA, NY 14853, 22 March 2023 (2023-03-22), XP091511050, DOI: 10.5121/CSIT.2023.130513 * Section "Discussion About Implementation and Problems" * | 2,3 | |
| A | EP 2 492 707 A1 (MITSUBISHI ELEC R&D CT EUROPE [NL]; MITSUBISHI ELECTRIC CORP [JP]) 29 August 2012 (2012-08-29) * figure 5 * * paragraph [0101] - paragraph [0139] * | 5 | TECHNICAL FIELDS SEARCHED (IPC) G01S |

The present search report has been drawn up for all claims

| Place of search | Date of completion of the search | Examiner |
|---|---|---|
| Munich | 17 April 2024 | Bomart, Sébastien |

**ANNEX TO THE EUROPEAN SEARCH REPORT
ON EUROPEAN PATENT APPLICATION NO.**

**EP 23 30 6926**

This annex lists the patent family members relating to the patent documents cited in the above-mentioned European search report.
The members are as contained in the European Patent Office EDP file on
The European Patent Office is in no way liable for these particulars which are merely given for the purpose of information.

**17-04-2024**

| Patent document cited in search report | Publication date | Patent family member(s) | Publication date |
|---|---|---|---|
| EP 2492707 A1 | 29-08-2012 | NONE | |

EPO FORM P0459

For more details about this annex : see Official Journal of the European Patent Office, No. 12/82